# EUROPÄISCHE PATENTSCHRIFT

(11) **EP 2 259 910 B1**
(45) Veröffentlichungstag und Bekanntmachung des Hinweises auf die Patenterteilung: **09.05.2012**
(21) Anmeldenummer: 09715739.0
(22) Anmeldetag: 07.02.2009
(51) Int. Cl.: B29C 49/72, B26D 5/08, B26F 1/02

(54) **Trennvorrichtung**
Separating device
Dispositif de séparation

(30) Priorität: 28.02.2008 DE 102008011772
(43) Veröffentlichungstag der Anmeldung: 15.12.2010
(73) Patentinhaber: Hansen, Bernd, 74429 Sulzbach-Laufen (DE)
(72) Erfinder: Hansen, Bernd, 74429 Sulzbach-Laufen (DE)
(74) Vertreter: Bartels, Martin Erich Arthur
(86) Internationale Anmeldenummer: PCT/EP2009/000872
(87) Internationale Veröffentlichungsnummer: WO 2009/106219

(56) Entgegenhaltungen:
- EP-A- 0 539 169
- EP-A- 1 604 803
- US-A1- 2005 000 331

## Beschreibung

Die Erfindung betrifft eine Trennvorrichtung zum Abtrennen einzelner Behältererzeugnisse aus einem Rahmenverbund, der aus einem Kunststoffmaterial, insbesondere aus Polypropylen, besteht, mit mindestens einer Stanzeinrichtung, die zumindest teilweise das jeweilige Behältererzeugnis von einem Rahmenabfall trennt gemäß der Merkmalsausgestaltung des Oberbegriffes des Patentanspruches 1.

Im Stand der Technik (DE 199 26 329 A1) sind Verfahren und Vorrichtungen zum Herstellen von Behältererzeugnissen aus Kunststoff bekannt, wie sie einer gattungsgemäßen Trennvorrichtung zugeführt werden, die dem Abtrennen der dahingehenden einzelnen Behältererzeugnisse aus einem Rahmenverbund unter Einsatz einer Schneid- oder Stanzeinrichtung dient.

Zum Herstellen des jeweiligen Behältererzeugnisses wird zunächst ein Schlauch plastifizierten Kunststoffmaterials in eine Formeinrichtung hinein extrudiert, das eine Ende des Schlauches durch Verschweißen verschlossen und durch Erzeugen eines am Schlauch wirkenden pneumatischen Druckgradienten dieser aufgeweitet und zur Bildung des Behälters an die formgebende Wand der Formeinrichtung, bestehend aus zwei gegenüberliegenden Formwerkzeugen, angelegt. Über einen entsprechenden Fülldorn wird dann der Kunststoffbehälter steril innerhalb der Formeinrichtung befüllt und nach Entnahme des Fülldornes anschließend hermetisch unter Bildung einer vorgebbaren Kopfgeometrie verschlossen, wobei für die Bildung des eigentlichen Kunststoffbehälters, in dem später das Fluid bevorratet ist, zwei Behälterformgebungsbacken mittels hydraulischer Antriebsmittel für den Erhalt einer Schließstellung aufeinander zu und in eine ihrer Öffnungsstellungen voneinander gegenläufig wegbewegbar sind. Um hier zu sehr hohen Ausstoßraten an Behältererzeugnissen zu gelangen, ist in der DE 103 23 335 A1 eine Mehrstationenanordnung beschrieben und durch das Aufteilen verschiedener Formgebungsschritte an verschiedene, auf einem fiktiven Kreisbogen hintereinander angeordnete Stationen ist eine Art Karussellanordnung geschaffen, die sehr hohe Taktfrequenzen für das auszustoßende Kunststoffgut in Form der Behältererzeugnisse ermöglicht.

Da das in das jeweilige Behältererzeugnis einzufüllende Füllgut gegenüber Umgebungsmedien häufig sehr anfällig ist, insbesondere wenn es sich beispielsweise um ein hochsensibles Pharmazeutikum handelt, wird im Stand der Technik darauf geachtet, dass man beispielsweise die Füllöffnung des Behälterschlauches zumindest von ihrer Bildung bis zum Befüllen des zugehörigen Behälters unter einem Sterilraum durch eine sterile Barriere abdeckt, wobei sich sehr gute Ergebnisse hierbei realisieren lassen, wenn man, wie in der DE 10 2004 004 755 A1 aufgezeigt, mittels der genannten Barriere ein steriles Medium unter Einsatz einer Medienfördereinrichtung in Richtung der Behälterfüllöffnung verbringt, um so die Keimfreiheit noch weiter zu verbessern. Eine andere oder zusätzliche Maßnahme zur Erhöhung der Steril ität ist, einfach höhere Verarbeitungstemperaturen, beispielsweise bei der Schlaucherstellung für das Behältererzeugnis, oder während des Einfüllens des Füllgutes vorzusehen, wobei eine erhöhte Verarbeitungstemperatur ihre Grenzen findet, wenn das häufig eingesetzte Kunststoffmaterial, wie Polyethylen, temperaturempfindlich ist, das sich im übrigen jedoch in dahingehenden Herstellvorrichtungen sehr gut verarbeiten läßt und insoweit bevorzugt wird.

Im übrigen können neben dem Luftsauerstoff auch sonstige Gase später bei der Lagerung und im Vertrieb des steril hergestellten Behältererzeugnisses durch die dünne Polyethylenwand ins Innere des Behälters hinein diffundieren und dergestalt den empfindlichen Behälterinhalt schädigen oder gar unbrauchbar machen.

Um diesem letztgenannten Nachteil zu begegnen, sind im Stand der Technik bereits Herstellverfahren für dahingehende Behältererzeugnisse vorgeschlagen worden (DE 103 47 907 A1 und DE 103 47 908 A1), die sog. Coextrusions-Herstellverfahren betreffen, bei denen der Behälter aus mehreren Schichten an Kunststoffmaterialien aufgebaut wird, wobei häufig mindestens eine der Schichten als Sperrschicht eingesetzt wird. Dabei können durchaus fünf und mehr Schichten, beispielsweise gebildet aus Polyethylen und Low-Density-Polyethylen sowie Copolymeren (Ethylen-Vinylalkohol-Copolymer), die mehrlagige Behälterwand bilden, die insoweit dann eine wirksame Sperrschicht ausbildet; jedoch sind die dahingehenden Verfahren in der praktischen Umsetzung kostenintensiv, was das jeweilige Behältererzeugnis entsprechend verteuert.

Sofern die einzelnen Behältererzeugnisse befüllt aus der jeweiligen Herstellmaschine kommen, liegen diese in der Art eines Ampullenblocks vor, bei dem mehrere, nebeneinander liegende Ampullen bzw. Behälter in der Art eines Block- oder Rahmenverbundes eine gemeinsame Wandung miteinander aufweisen. Um die Behälter oder Ampullen aus dem Block- oder Rahmenverbund zu lösen, werden diese entlang von Randzonen ausgeschnitten oder ausgestanzt, wobei insoweit dann eine gewisse Menge an Rahmenabfall entsteht, der aber mit modernen Techniken recycelbar ist. Durch die DE-PS 38 31 957 ist ein Verfahren zum Herstellen von hohlen Behältererzeugnissen aus Kunststoffen bekannt, die als Ampullenblock oder Rahmenverbund zunächst vorliegen, wobei in einer Randzone des Rahmenabfalls zusätzlich ein Hohlkörper eingeformt wird, was die Stabilität im Rahmenverbund erhöht und unter anderem die Trennung von Behältererzeugnis zu Rahmenabfall mittels der jeweils eingesetzten Trennvorrichtung erleichtern hilft.

Durch die US 2005/0000331 A1 ist eine gattungsgemäße Trennvorrichtung bekannt zum Abtrennen einzelner Behältererzeugnisse aus einem Rahmenverbund, der aus einem Kunststoffmaterial besteht, mit mindestens einer Stanzeinrichtung, die zumindest teilweise das jeweilige Behältererzeugnis von einem Rahmenabfall trennt, wobei die Stanzeinrichtung mittels eines von einer Antriebseinheit antreibbaren Triebs, entlang einer Stanzachse von einer Ausgangsstellung in eine Stanzstellung und umgekehrt bewegbar ist. Bei der bekannten Lösung dient als Antriebseinheit ein Servomotor, der mit einem Stellzylinder mit bewegbarer Kolbenstange in der Art eines Arbeitszylinders zusammenwirkt um dergestalt die für einen Stanzvorgang benötigten hohen Kräfte zur Verfügung stellen zu können.

Durch die EP 1 604 803 A1 ist eine Vorrichtung zum Herstellen eines Bandes von etikettierten Behältern aus einer erwärmten thermoplastischen Kunststofffolie bekannt. Mit der bekannten Vorrichtung wird ein Band von etikettierten Behältern gefertigt, das unmittelbar Nachfolgeeinrichtungen, z. B. zum Füllen, Versiegeln, Ausstanzen und Übergeben in Sammelpakkungen, zugeführt werden kann. Bei der bekannten Lösung wird, nachdem ein Transport eines Abschnittes der erwärmten Kunststofffolie in die Vorrichtung stattgefunden hat, ein Werkzeugträger mit einzelnen Formnestern angehoben, durchaus auch unter Einsatz eines direkt in Axialrichtung wirkenden Kugelgewindetriebes mit motorischer oder servomotorischer Unterstützung, wobei ein gegenüberliegendes Oberteil gegebenenfalls derart abgesenkt wird, dass durch Tiefziehen die in einem Unterteil des Formwerkzeuges aufgenommenen Behälter verformt und dabei das zuvor pro Formnest eingelegte Etikett mit dem Behälter fest verbunden wird.

Während des Tiefziehens wird das entsprechende Formwerkzeug mittels des Kugelgewindetriebes mit geringer Geschwindigkeit bis zum Erreichen der maximalen Tiefziehkraft verfahren und insoweit werden hohe Geschwindigkeiten vermieden, die ansonsten zu Beeinträchtigungen des Tiefziehens führen, wobei man für einen verbesserten Formvorgang sich die Genauigkeit bei der Zustellbewegung des Kugelgewindetriebes zu eigen macht.

Ausgehend von diesem Stand der Technik liegt der Erfindung die Aufgabe zugrunde, eine Trennvorrichtung zu schaffen, mit der mit hoher Geschwindigkeit sich die Trennung der Behältererzeugnisse - gleichgültig aus welchem Kunststoffmaterial bestehend - vom Rahmenverbund erreichen läßt und die neben einem hohen Maß an Funktionssicherheit auch relativ geringe Herstellkosten aufweist. Eine dahingehende Aufgabe löst eine Trennvorrichtung mit den Merkmalen des Patentanspruches 1 in seiner Gesamtheit.

Dadurch, dass gemäß dem kennzeichnenden Teil des Patentanspruches 1 der Trieb ein Kugelgewindetrieb ist, dass mittels eines Dämpfungssystems eine Überlastung des Kugelgewindetriebes beim Stanzvorgang vermieden ist, und dass das Dämpfungssystem mindestens einen Energiespeicher aufweist, der die Stanzeinrichtung von dem Kugelgewindetrieb entkoppelt, läßt sich mit sehr hoher Geschwindigkeit, bedingt durch die vorzugsweise mittels eines Elektromotors antreibbare Gewindespindel, die Trennung vornehmen und zusätzliche mechanische Komponenten zum Ausüben einer Zwangskraft auf den Stanzkörper bei der Trennlinienerstellung können entfallen. Durch den verwendeten Kugelgewindetrieb lassen sich die Einsatzenergien entsprechend reduzieren, was einem kostengünstigen Betrieb der Trennvorrichtung zugute kommt. Durch den Einsatz eines Dämpfungssystems wird eine Überlastung des Kugelgewindetriebes beim Stanzvorgang vermieden, und durch die Entkopplung der eigentlichen Stanzeinrichtung von dem Kugelgewindetrieb während des Stanzvorganges läßt sich besonders schonend der Stanzvorgang einleiten und der Kugelgewindetrieb wird entlastet, was dessen Einsatzdauer erhöht. Vorzugsweise kommt als Energiespeicher des Dämpfungssystems eine Druckfeder zum Einsatz.

Insbesondere hat sich gezeigt, dass sich mit der erfindungsgemäßen Trennvorrichtung Polypropylen als Wandmaterial für die Behältererzeugnisse einsetzen läßt; ein gegenüber einem Polyethylenwerkstoff derart sprödes Kunststoffmaterial, das sich ansonsten nur schwer mit den konventionellen Stanz- und Schneideinrichtungen zur Behältertrennung bearbeiten läßt. Sofern konventionelle Trennvorrichtungen zum Einsatz kommen, hat es sich gezeigt, dass man im Hinblick auf die sehr hohen Verarbeitungstemperaturen des Polypropylens mehrere Minuten warten müßte, bis der Stanz- oder Schneidvorgang überhaupt möglich ist. Dies führt dann aber zwangsläufig dazu, dass man für die zu trennenden Behältererzeugnisse sehr lange Staustrecken und/oder zusätzliche Kühleinrichtungen benötigt, um die Trennung ausschußfrei überhaupt vornehmen zu können. Aufgrund der über den Kugelgewindetrieb ansteuerbaren Stanzeinrichtung kann ohne solche Wartezeiten oder Kühlzusatzeinrichtungen eine saubere Trennung erfolgen, indem man das jeweilige Behältererzeugnis aus dem noch sehr warmen oder heißen Rahmenverbund mit hoher Geschwindigkeit mittels des Spindeltriebes entlang der vorgesehenen Stanzlinien einfach abschlägt. Es ist für einen Durchschnittsfachmann auf dem Gebiet solcher Trennvorrichtungen überraschend, dass er mit relativ stumpf gehaltenen Stanzschneiden der Stanzeinrichtung, die nicht weiter nachbearbeitet (geschliffen) oder sonst gewartet werden müssen, zu derart sauberen Trennstanzlinien gelangt, was so mit den Mitteln im Stand der Technik bisher nicht möglich war.

Der Vorteil des Einsatzes von Polypropylenmaterial anstelle von Polyethylen oder einem coextrudierten Mehrlagenverbund, bestehend aus LDPE/MDPE, liegt darin, dass man das Polypropylenmaterial bei höheren Temperaturen (121°C) autoklavieren kann, wobei das Polypropylenmaterial aus nur einem Extrusionskopf deutlich günstiger zu erhalten ist als die beschriebenen Mehrlagensysteme. So benötigt letztendlich jede herzustellende Einzelschicht im Mehrlagensystem einen eigenen Extrusionskopf in der Herstellmaschine, was den Herstellaufwand auch von der Steuerungsseite her entsprechend erhöht.

Sofern die erfindungsgemäße Trennvorrichtung mit der mittels eines Kugelgewindetriebes antreibbaren Stanzeinrichtung zum Einsatz kommt, ist die dahingehende Anwendung hierauf nicht eingeschränkt; vielmehr gibt es hier eine Vielzahl an Einsatzmöglichkeiten und die erfindungsgemäße Trennvorrichtung kann auch für sonstige Kunststoffmaterialien, wie Polyethylen oder Kunststoff-Mehrlagensysteme, zur Trennung des Behältererzeugnisses bei Bedarf eingesetzt werden.

Die erfindungsgemäße Trennvorrichtung ist in der Art einer Säulenkonstruktion ausgebildet mit einzelnen voneinander beabstandeten Führungs- und Einstellplatten, wobei die Säulenkonstruktion neben sog. Einstellsäulen auch Führungssäulen aufweist, die zusammen mit den zuordenbaren Platten zu einer sehr ausgesteiften Ständerbauweise führen.

Weitere vorteilhafte Ausführungsformen der erfindungsgemäßen Trennvorrichtung sind Gegenstand der sonstigen Unteransprüche.

Im folgenden wird die erfindungsgemäße Trennvorrichtung anhand eines Ausführungsbeispiels nach der Zeichnung näher erläutert. Dabei zeigen in prinzipieller und nicht maßstäblicher Darstellung die
- Fig.1: einen in stirnseitiger Draufsicht angegebenen Rahmenverbund, bestehend aus einem eigentlichen Ampullenblock und dem Rahmenabfall;
- Fig.2: einen vom Rahmenabfall weitgehend befreiten Ampullenblock, bei dem die Einzelbehältererzeugnisse mit Zwischenwandstegen lösbar miteinander als Handelseinheit verbunden sind;
- Fig.3: teilweise in Ansicht, teilweise im Längsschnitt gesehen, eine Frontansicht auf die Trennvorrichtung als Ganzes;
- Fig.4 und 5: eine der Fig.3 entsprechende Frontansicht auf die Trennvorrichtung, dargestellt ohne Stanzeinrichtung und Matrize bzw. eine Draufsicht auf die Trennvorrichtung nach den Fig.3 und 4;
- Fig.6 und 7: eine Seitenansicht in Blickrichtung auf die Trennvorrichtung längs des Pfeiles X in Fig.4 bzw. einen Schnitt längs der Linie A - A in Fig.6;
- Fig.8: eine Draufsicht auf die Stanzmatrize nach der Fig.3 mit Transporteinrichtung zum Antransport der aus dem Rahmenverbund abzutrennenden Behältererzeugnisse.

Bei einem Teil der Figuren wurden Baukomponenten der Gesamtvorrichtung weggelassen, um eine bessere Darstellbarkeit der erfindungsgemäßen Lösung zu erhalten.

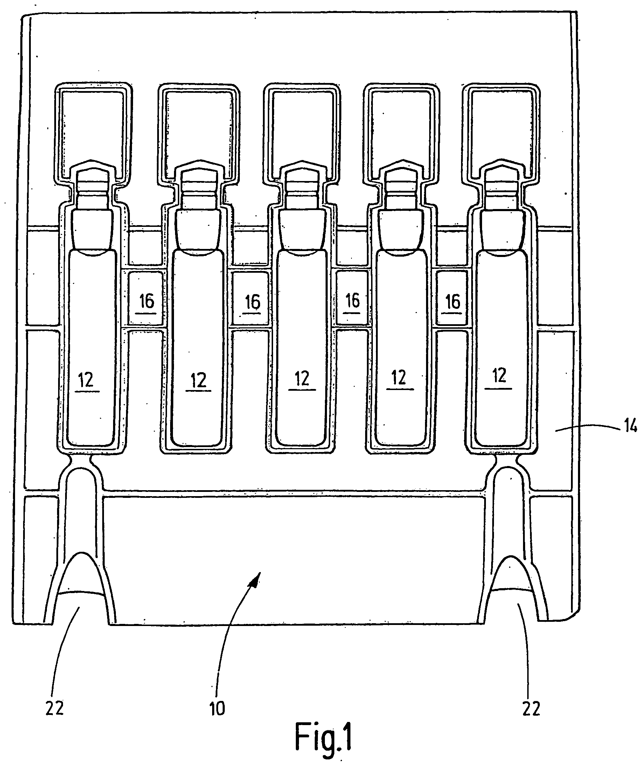

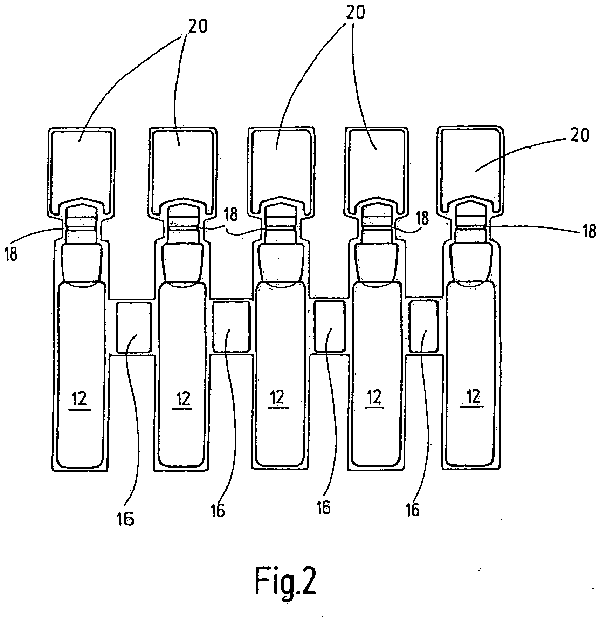

Der in der Fig.1 gezeigte und als Ganzes mit 10 bezeichnete Rahmenverbund besteht aus einem Kunststoffmaterial, im vorliegenden Fall aus einem Polypropylenwerkstoff. Der Rahmenverbund 10 setzt sich grundsätzlich aus den eigentlichen Behältererzeugnissen 12 zusammen sowie dem sog. Rahmenabfall 14, der von den eigentlichen Behältererzeugnissen 12 zu trennen ist. Sind die Behältererzeugnisse 12 vom Rahmenabfalls 14 getrennt, ergibt sich insoweit ein vom Rahmenabfall 14 befreiter Ampullenblock gemäß der Darstellung nach der Fig.2, wobei die einzelnen Behälter oder Einzelampullen 12 über stehengebliebene Zwischenwandstege 16 des Rahmenabfalls 14 miteinander lösbar verbunden sind, wobei die Zwischenwandstege 16 es ermöglichen, dass das jeweilige Behältererzeugnis 12 in der Art einer Twist-Off-Bewegung von den sonstigen im Block verbleibenden Behältern 12 separiert wird.

Das jeweilige Behältererzeugnis 12 ist im Stand der Technik bekannt und die vorstehend beschriebene Ampullenblocklösung ist beispielsweise in der DE 38 31 957 C1 aufgezeigt. Die in den Fig.1 und 2 gezeigte Grundform stellt nur eine Art eines Ausführungsbeispiels dar und insbesondere können die Behältergeometrien in weit gezogenem Rahmen anwenderseitig vorgegeben werden. Zur Freigabe des jeweiligen Behälterinhalts, regelmäßig in Form eines zuvor eingefüllten Fluids, dient ein Knebelverschluß 18, der über eine Handhabe 20 gleichfalls in der Art einer Twist-Off-Bewegung vom sonstigen Behältererzeugnis 12 über ein entsprechende Sollbruchstelle abtrennbar ist mit der Folge, dass dann über die freigelegte Behälteröffnung das Fluid entnommen werden kann. Andere Behälteröffnungslösungen, wie Tropferkappen etc., sind gleichfalls realisierbar.

An der Unterseite des Rahmenverbundes 10 gemäß der Darstellung nach der Fig.1 sind eine Art Sacklöcher 22 eingebracht und mit Hilfe von Stiften einer Transporteinrichtung (nicht dargestellt), welche in die Sacklöcher 22 am unteren Rand des Rahmenabfalls 14 eingreifen, wird der Rahmenverbund 10, bestehend aus den Behältererzeugnissen 12 und dem Rahmenabfall 14, aus dem Werkzeug einer nicht näher dargestellten Herstellmaschine entnommen, wobei, Dank der hohen Stabilität des Rahmenabfalls wegen, in Form einer in sich geschlossenen Abfallrandzone die Entnahme auch dann sicher und problemlos möglich ist, wenn der Kunststoff des Rahmenverbundes 10 noch nicht vollständig abgekühlt ist. Die dahingehende Ausgestaltung ist üblich und beispielsweise in der EP 0 359 971 A2 aufgezeigt, so dass an dieser Stelle hierauf nicht mehr näher eingegangen wird.

Des weiteren besteht auch die Möglichkeit, die Sacklöcher 22 oder eine sonstige Eingriffsmöglichkeit für eine Transporteinheit in Blickrichtung auf die Fig.1 gesehen in vertikaler Ausrichtung seitlich als Teil des Rahmenabfalls 14 an diesem anzuordnen, sofern anstelle der in Fig.1 aufgezeigten horizontal verlaufenden Transportrichtung eine solche in hierzu senkrechter Richtung, also in Richtung der Behälterlängsachsen gewünscht ist. Wie man den Rahmenverbund entsprechend in die Trennvorrichtung als Schneid-oder Stanzvorrichtung einbringt bzw. wieder aus dieser abholt, ist beispielsweise Gegenstand der DE 38 32 566 C2, bei der ein bewegbarer Transporthaken in die Transportausnehmungen im Rahmenabfall des Rahmenverbundes 10 eingreift.

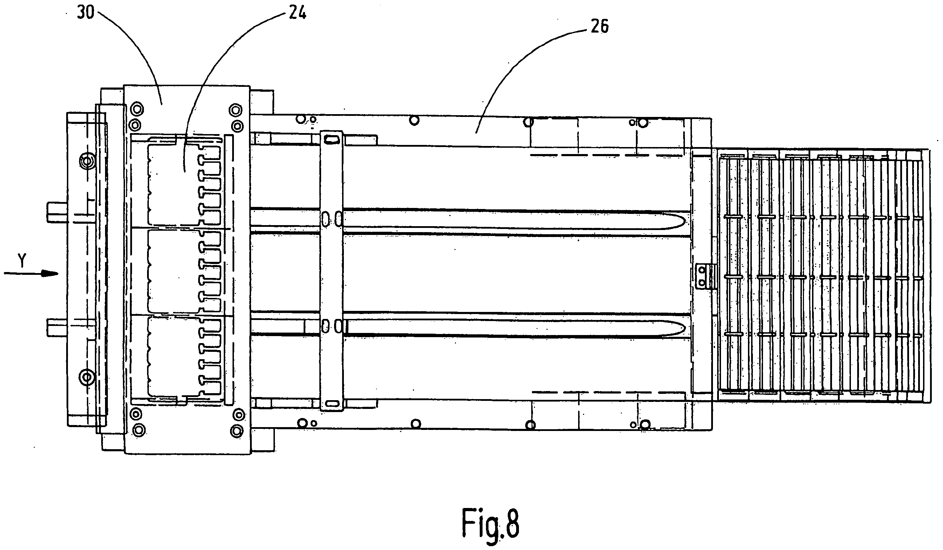

Für einen Trenn- oder Stanzvorgang kommt, in Blickrichtung auf die Fig.8 gesehen, von einer nicht näher dargestellten Herstellmaschine kommend, der jeweilige Rahmenverbund 10 von rechts nach links in eine Matrize 24, wobei die in Fig.8 dargestellte Matrize 24 eine Aufnahmemöglichkeit bietet für drei nebeneinander liegende Rahmenverbundanordnungen 10 mit jeweils fünf zusammenhängenden Behältererzeugnissen 12. Die jeweiligen Behältererzeugnisse 12 sind von der Herstellmaschine kommend über den Rahmenabfall 14 miteinander verbunden, wobei nach dem Stanz- oder Trennvorgang ein Behälterverbund gemäß der Darstellung nach der Fig.2 in Blickrichtung auf die Fig.8 gesehen linksseitig die Matrize 24 zu verlassen hat, um anschließend in entsprechende Verpackungseinheiten für den Weitertransport verpackt zu werden. Das Ein- und Ausbringen des jeweiligen Rahmenverbundes 10 mit den Behältererzeugnissen 12 in die Matrize 24 über die Transporteinrichtung 26 bzw. aus der Matrize 24 ist Stand der Technik, so dass an dieser Stelle hierauf nicht mehr näher eingegangen wird.

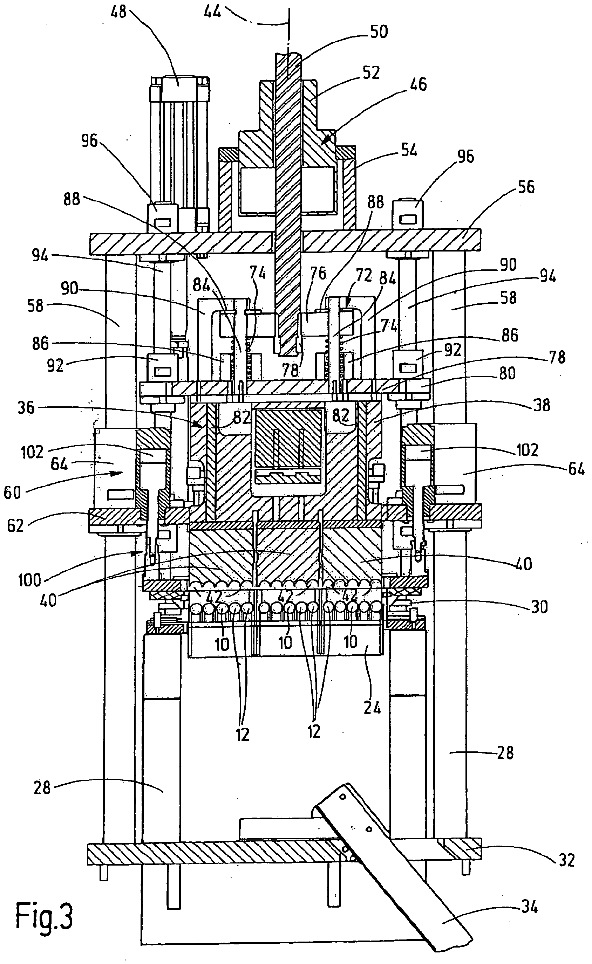

Die Fig.3 gibt in Blickrichtung des Pfeiles Y der Fig.8 gesehen die rückwärtige Ansicht der Matrize 24 wieder mit den drei Rahmenverbundeinheiten 10 mit den jeweils fünf Behältererzeugnissen 12. Wie sich aus der rückwärtigen Frontansicht nach der Fig.3 weiter ergibt, ist die aus einem massiven Metallblock bestehende Matrize 24 über Stützsäulen 28 aufgeständert, die sich zwischen einem Matrizenrahmen 30 für die Matrize 24 und einer unteren Basisplatte 32 erstrecken, die von einer Rutsche 34 durchgriffen ist, die dem Abtransport von Kunststoffabfall aus der Trennvorrichtung dient. Die vier Stützsäulen 28 sind vorzugsweise in ihrer Länge einstellbar, um so die Ausrichtung der Matrize 24 nach vorgegebenen Produktionskriterien zu ermöglichen. Die rechteckförmig ausgebildete untere Basisplatte 32 erlaubt einen modularen Aufbau für die gesamte Trennvorrichtung, so dass sich eine leicht zu installierende Baueinheit ergibt, die in den Ablauf bereits vorhandener Herstellmaschinen einfach zu integrieren ist.

Die in der Fig.3 dargestellte Trennvorrichtung weist eine als Ganzes mit 36 bezeichnete Stanzeinrichtung auf, die vergleichbar der Matrize 24 aus einem massiven metallenen Rahmenblock besteht und mehrteilig aufgebaut sein kann. Zur Erhöhung des Stanz- oder Schneiddruckes kann ein blockartiges Einsatzgewicht 38 dienen, an dessen Unterseite sich einzelne Obermatrizen 40 anschließen, die wiederum an ihrer Unterseite die Stanzmesser 42 aufweisen, die die Trennung des Rahmenabfalls 14 von den Behältererzeugnissen 12 ermöglichen, um von einem Vor-Produkt gemäß der Darstellung nach der Fig.1 zu dem fertigen Behältererzeugnisverbund nach der Fig.2 zu gelangen. Insoweit fahren die leistenartigen Stanzmesser 42 in die Zwischenabstände zwischen die in der Matrize 14 aufgenommenen Behältererzeugnisse 12 für einen jeden Rahmenverbund 10 ein. Die dahingehende Anordnung ist insofern nur beispielhaft, als auch ein oder zwei Einheiten eines Rahmenverbundes 10 sich mittels der Trennvorrichtung bearbeiten lassen oder größere Einheiten an Rahmenverbundanordnungen mit einer unterschiedlichen Anzahl an Behältererzeugnissen 12. Die jeweilige Anordnung wird insoweit von dem Maschinenbetreiber und seinen Anforderungen vorgegeben.

Zum Bewegen der blockartigen Stanzeinrichtung 36 entlang einer Stanzachse 44 dient ein als Ganzes mit 46 bezeichneter Kugelgewindetrieb, der von einem Elektromotor 48 betätigbar ist. Als Elektromotor 48 kommt insbesondere ein konventioneller Servomotor mit kurzen Schaltzeiten, betreffend die jeweilige Umschaltrichtung, zum Einsatz. Der Kugelgewindetrieb 46 weist eine stabartige Kugelrollspindel 50 auf, die in einer Gewindebuchse 52 geführt in Blickrichtung auf die Fig.3 gesehen von der dort gezeigten angehobenen Position in die Stanz- oder Trennposition entlang der Stanzachse 44 nach unten verfahrbar ist. Hierfür treibt der Elektromotor 48 über ein nicht dargestelltes Abtriebsritzel, beispielsweise mittels eines nicht näher dargestellten Zahnrahmentriebes, die Gewindebuchse 52 an, die insoweit drehbar in einer Drehaufnahme 54 geführt ist. Der dahingehende Riementrieb verläuft innerhalb einer oberen Basisplatte 56, die die Trennvorrichtung als Baueinheit insoweit nach oben hin abschließt. Elektromotor 48, Drehaufnahme 54 mit Gewindebuchse 52 und ein Teil der Kugelrollspindel 50 stehen insoweit mit einem vorgebbaren Überstand in Blickrichtung auf die Fig.3 gesehen über die obere Basisplatte 56 vor.

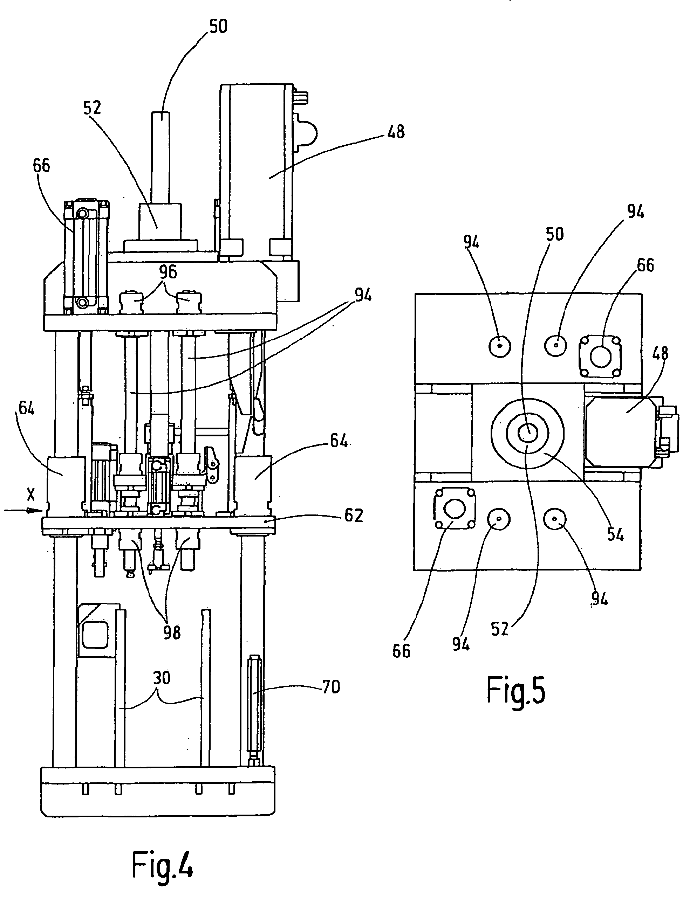

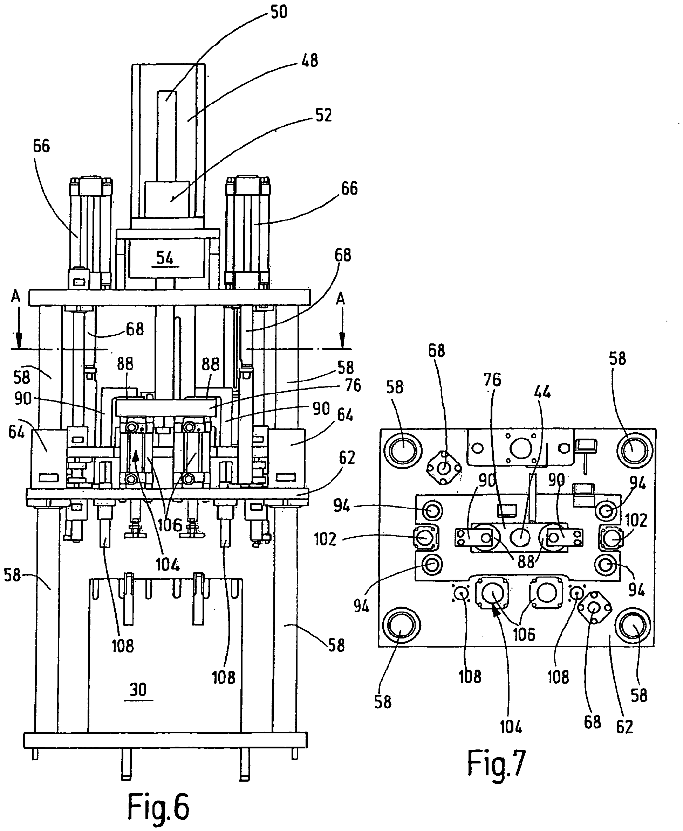

Zur Aussteifung des Gesamtsystems erstrecken sich zwischen unterer Basisplatte 32 und der oberen Basisplatte 56 vier Einstellsäulen 58, die, bezogen auf die Stanzachse 44, paarweise diametral einander gegenüberliegend angeordnet sind (vgl. Fig.7). Die vier Einstellsäulen 58 durchgreifen als Teil einer als Ganzes mit 60 bezeichneten Einstelleinrichtung eine quadratisch ausgebildete Einstellplatte 62, die insoweit mit vier Einstellbuchsen 64 versehen ist, die die jeweilige Einstellsäule 58 umgreifen. Als weiterer Teil der Einstelleinrichtung 60 sind auf der Oberseite der oberen Basisplatte 56 zwei Arbeitszylinder 66 (vgl. Fig.6) angeordnet, die in der Art von Hydraulik-oder Pneumatikzylindern ausgebildet mittels Einstellstangen 68, die mit ihrem unteren Ende an der Einstellplatte 62 festgelegt sind, deren Höheneinstellung längs den Einstellsäulen 58 veranlassen. Der einfacheren Darstellung wegen ist in der Fig.3 die dahingehende Zylinderanordnung 66 mit Einstellstangen 68 nicht gezeigt. Auch wurde der einfacheren Darstellung wegen in den Fig.4 und 6 die Stanzeinrichtung 36 weggelassen. Mit der genannten Einstelleinrichtung 60 läßt sich in Abhängigkeit von den Einsatzbedingungen vor Ort die Stanzebene für die Stanzeinrichtung 36 einstellen, wobei in Blickrichtung auf die Fig.4 gesehen nach unten hin die Einstellebene durch einen Anschlagkörper 70 begrenzt sein kann.

Des weiteren ist ein in der Fig.3 dargestelltes, als Ganzes mit 72 bezeichnetes Dämpfungssystem vorhanden, das mit dazu beiträgt, eine Überlastung des Kugelgewindetriebes 46 im Betrieb, insbesondere beim Stanzvorgang selbst, vermeiden zu helfen. Hierzu weist das Dämpfungssystem 72 einen Energiespeicher in Form von zwei Druckfedern 74 auf, die die Stanzeinrichtung 36 insoweit von dem Kugelgewindetrieb 46 entkoppelt. Hierzu stützen sich die beiden Druckfedern 74 mit ihrer in Blickrichtung auf die Fig.3 dargestellten Oberseite an einer Anschlagplatte 76 ab, die mit dem unteren Ende der Kugelrollspindel 50 über eine Festlegemutter 78 fest verbunden ist. Das untere Ende der jeweiligen Druckfeder 74 stützt sich an einer Führungsplatte 80 ab, an deren Unterseite über Haltestäbe 82 fest verbunden sich die Stanzeinrichtung 36 anschließt. Anstelle der genannten Druckfedern 74 kann als Energiespeicher auch eine andere Lösung zum Einsatz kommen, beispielsweise in Form einer Tellerfeder und dergleichen mehr.

Bei der Ausführungsform nach der Fig.3 umfaßt aber die jeweilige Druckfeder 74 einen Führungsbolzen 84, der jeweils eine Führung bildet für die Anschlagplatte 76, die insoweit zwischen zwei Endstellungen mittels der Kugelrollspindel 50 hin und her bewegbar ist. Die untere mögliche Endstellung ist über untere Pufferhülsen 86 gebildet, die in der Art eines Elastomermaterials ausgebildet sein können und die jeweilige Druckfeder 74 nebst Führungsbolzen 84 umfassen. In der anderen, nach oben gerichteten Anschlagsituation weist die Oberseite der Anschlagplatte 76 ringförmige Dämpfungskörper 88 auf, die sich an winkelförmigen Begrenzungsleisten 90 abstützen, sofern die Kugelrollspindel 50 ihre in der Fig.3 eingenommene Nichtbetätigungsstellung einnimmt.

Wird der Elektromotor 48 in Betrieb genommen und soll ein Stanzvorgang vorgenommen werden, wird die Kugelrollspindel 50 entlang der Stanzachse 44 in Blickrichtung auf die Fig.3 gesehen nach unten bewegt und die Anschlagplatte 76 wird so lange mitgenommen entgegen der Wirkung der beiden Druckfedern 74, bis sie in Anlage kommt mit der Oberseite der Pufferhülsen 86 und bei der weiteren Abwärtsbewegung wird dann mittels der Stanzeinrichtung 36 für den jeweiligen Rahmenverbund 10 der Stanzvorgang veranlaßt. Bewegt sich in umgekehrter Abfolge die Kugelrollspindel 50 nach oben, wird die Anschlagplatte 76 so lange nach oben mitbewegt, bis gemäß der Darstellung nach der Fig.3 diese in Untergriff mit den winkelförmigen Abkröpfungen der beiden Begrenzungsleisten 90 kommt, wobei die dahingehende Anstoßbewegung durch die Dämpfungskörper 88 abgefedert wird.

Die Führungsplatte 80 ist wiederum über entsprechende Führungsbuchsen 92 entlang von vier Führungssäulen 94 geführt. Wie insbesondere die Darstellung nach der Fig.7 zeigt, sind die dahingehenden Führungssäulen 94 wiederum diametral einander gegenüberliegend zu der Stanzachse 44 angeordnet und liegen innerhalb der äußeren Umfangsebene mit den vier Einstellsäulen 58. Um eine ungestörte Verfahrbarkeit der Einzelkomponenten gewährleisten zu können, durchgreift insoweit die blockartige Stanzeinrichtung 36 als Ganzes eine entsprechende rechteckförmige Ausnehmung in der Einstellplatte 62. Die vier Führungssäulen 94 sind auf der Oberseite der oberen Basisplatte 56 in Aufnahmen 96 geführt, die im übrigen an ihrem unteren gegenüberliegenden Ende (vgl. Fig.4) in Führungsaufnahmen 98 an der Unterseite der Einstellplatte 62 aufgenommen sind, die in axialer Richtung parallel zur Stanzachse 44 eine Bewegung für die Führungssäulen 94 zulassen; quer dazu aber in radialer Richtung eine definierte Lage ermöglichen; dergestalt ist eine relative Einstellung der Einstellplatte 62 zur Führungsplatte 80 möglich.

Die Stanzeinrichtung 36 ist ferner von einer als Ganzes mit 100 bezeichneten Niederhaltereinrichtung zumindest teilweise umfaßt, die in der Art eines plattenartigen Niederhalterrahmens ausgebildet von zwei Arbeitszylindern 102 (s. Fig.3) auf- und absenkbar ist. In der abgesenkten Stellung dient die Niederhaltereinrichtung 100 dem Niederdrücken des Rahmenabfalls 14 in Richtung des Matrizenrahmens 30, um dergestalt eine saubere Anlage des jeweiligen Rahmenverbundes 10 in der zugehörigen Ausnehmung der Matrize 24 zu gewährleisten. Die benötigten Arbeitszylinder 102 werden vorzugsweise hydraulisch, pneumatisch oder servoelektrisch angetrieben und sind mit ihren Gehäuseteilen fest mit der Einstellplatte 62 verbunden, so dass relativ bezogen auf die Einstellplatte 62 die Niederhaltereinrichtung 100 sich bewegen kann. Um demgegenüber aber einen ungestörten Betrieb für die Anschlagplatte 76 gewährleisten zu können, in dem Sinne, dass diese sich parallel zur Stanzachse 44 auf- und abbewegen kann, ist, wie sich dies insbesondere aus der Fig.7 ergibt, die Anschlagplatte 76 mit zwei U-förmigen Ausnehmungen versehen, die jeweils von Gehäuseteilen des jeweiligen Arbeitszylinders 102 durchgriffen sind.

Des weiteren weist die erfindungsgemäße Trennvorrichtung eine als Ganzes mit 104 bezeichnete Auswerfereinrichtung (Fig.7) auf, die etwaig in der Stanzeinrichtung 36 verbliebenen Kunststoffabfall des Verbundes 10 über die Rutsche 34 auswirft. Hierfür weist die Auswerfereinrichtung 104 zwei vorzugsweise hydraulisch, pneumatisch oder servoelektrisch betätigbare Arbeitszylinder 106 auf, die zwei Auswerferstifte 108 betätigen, die insoweit in Blickrichtung auf die Fig.6 gesehen unterhalb der Einstellplatte 62 vorstehen, wohingegen die Arbeitszylinder 106 oberhalb der Einstellplatte 62 angeordnet sind.

Des besseren Verständnisses wegen soll im folgenden ein Ablauf für einen Stanzvorgang beschrieben werden. Über einen vorgebbaren Taktvorschub wird das Ampullenband mit den drei Rahmenverbundeinheiten 10 in die Trennvorrichtung in der Art einer Stanze transportiert. Ist der jeweilige Rahmenverbund 10 über der Matrize 24 angelangt, wird durch vertikales Absenken im Rahmen des Taktvorschubes die blockartige Stanzeinrichtung 36 in Stanzposition gebracht. Danach drückt von oben der Niederhalter 100 pneumatisch betätigt auf das Ampullenband und klemmt dieses zwischen Niederhalter 100 und Matrize 24 ein. Danach wird der eigentliche Stanzhub ausgelöst, wobei der Elektromotor 48 in der angeschalteten Stellung den Kugelgewindetrieb 46 betätigt. Über das vorgestellte Dämpfungssystem 72 wird vermieden, dass zu große Stöße während des Stanzvorganges auf die Gewindespindel, beispielsweise in Form der Kugelrollspindel 50, übertragen werden. Wenn der Stanzhub beendet ist, drücken pneumatisch betätigte Auswerferstifte 108 eventuell in dem Stanzstempel der Stanzeinrichtung 36 hängengebliebene Ampullen 12 auf eine Auflage (Rutsche 34). Einen Takt hinter der Stanzposition der Ampullen 12 wird zeitlich kurz nach der Ampullenstanzung der Abfallstreifen in Form des Rahmenabfalls 14 durch pneumatische Stanzung zerkleinert (nicht dargestellt).

Nach den Stanzvorgängen fahren Auswerferstifte 108, der Stanzstempel in Form der Stanzeinrichtung 36 mit den Stanzmessern sowie der Niederhalter 100 und die Auflage für den Taktvorschub wieder nach oben und der nächste Takt kann beginnen. Für eine bessere Zugänglichkeit bei Montage und Wartung kann ein sog. Wartungshub ausgeführt werden, bei dem der obere Aufbau und mithin die Einstellplatte 62 nach oben weggefahren wird. Der Kugelgewindetrieb 46 mit ansteuerbarer Gewindespindel erlaubt sehr rasche Zustellvorgänge und das Einleiten sehr hoher Stanzkräfte über die Stanzeinrichtung 36, was mit konventionellen Einrichtungen so bisher nicht erreicht wurde. Damit die Stanzeinrichtung 36 nicht auf Kollision mit der unteren Matrize 24 fährt, können Anschläge, Erfassungssensoren und/oder eine Überwachungselektronik für den Elektromotor 48 vorgesehen sein.

## Patentansprüche

1. Trennvorrichtung zum Abtrennen einzelner Behältererzeugnisse (12) aus einem Rahmenverbund (14), der aus einem Kunststoffmaterial, insbesondere aus Polypropylen, besteht, mit mindestens einer Stanzeinrichtung (36), die zumindest teilweise das jeweilige Behältererzeugnis (12) von einem Rahmenabfall (14) trennt, wobei die Stanzeinrichtung (36) mittels eines von einer Antriebseinheit antreibbaren Triebes, entlang einer Stanzachse (44) von einer Ausgangsstellung in eine Stanzstellung und umgekehrt bewegbar ist, **dadurch gekennzeichnet, dass** der Trieb ein Kugelgewindetrieb ist, dass mittels eines Dämpfungssystems (72) eine Überlastung des Kugelgewindetriebes (46) beim Stanzvorgang vermieden ist, und dass das Dämpfungssystem (72) mindestens einen Energiespeicher aufweist, der die Stanzeinrichtung (36) von dem Kugelgewindetrieb (46) entkoppelt.

2. Trennvorrichtung nach Anspruch 1, **dadurch gekennzeichnet, dass** die Antriebseinheit in Form eines Elektromotors (48) ausgebildet ist.

3. Trennvorrichtung nach Anspruch 1 oder 2, **dadurch gekennzeichnet, dass** der jeweilige Energiespeicher in Form einer Druckfeder (74) ausgebildet ist.

4. Trennvorrichtung nach einem der Ansprüche 1 bis 3, **dadurch gekennzeichnet, dass** der Energiespeicher des Dämpfungssystems (72) sich zwischen einer Anschlagplatte (76), die mit der Kugelrollspindel (50) des Gewindetriebes (46) verbunden ist, und einer Führungsplatte (80) mit der Stanzeinrichtung (36) erstreckt.

5. Trennvorrichtung nach Anspruch 4, **dadurch gekennzeichnet, dass** die Anschlagplatte (76) in einer angehobenen Stellung der Stanzeinrichtung (36) an einen Anschlag (90) der Führungsplatte (80) anstößt und dass die Führungsplatte (80) entlang mindestens einer Führungssäule (94) geführt ist.

6. Trennvorrichtung nach einem der Ansprüche 1 bis 5, **dadurch gekennzeichnet, dass** zur Einstellung der Stanzebene der Stanzeinrichtung (36) eine Einstelleinrichtung (60) dient, die eine Einstellplatte (62) aufweist, die mittels mindestens einer Einstellsäule (58) in der Höhe einstellbar ist.

7. Trennvorrichtung nach Anspruch 6, **dadurch gekennzeichnet, dass** die jeweilige Führungssäule (94) der Führungsplatte (80) die Einstellplatte (62) durchgreift und an dieser zumindest teilweise festgelegt ist, und dass die jeweilige Einstellsäule (58) weiter von der Stanzachse (44) entfernt ist als die jeweilige Führungssäule (94).

8. Trennvorrichtung nach Anspruch 6 oder 7, **dadurch gekennzeichnet, dass** die Stanzeinrichtung (36) von einer Niederhaltereinrichtung (100) zumindest teilweise umfaßt ist, die mittels mindestens eines Arbeitszylinders (102) anhebbar und absenkbar ist, der jeweils mit der Einstellplatte (62) verbunden ist.

9. Trennvorrichtung nach Anspruch 8, **dadurch gekennzeichnet, dass** die Niederhaltereinrichtung (100) den Rahmenverbund (10) mit den Behältererzeugn issen (12) für einen Stanzvorgang gegen eine Matrize (24) drückt, die Ausnehmungen für die zumindestteilweise Aufnahme der Behältererzeugnisse (12) aufweist.

10. Trennvorrichtung nach einem der Ansprüche 6 bis 9, **dadurch gekennzeichnet, dass** in der Einstellplatte (62) eine Auswerfereinrichtung (104) angeordnet ist, die etwaig in der Stanzeinrichtung (36) verbliebene Behältererzeugnisse (12) des Verbundes (10) auswirft.

## Claims

1. A separating device for separating individual container products (12) from a frame assemblage (14) which is made from a plastic material, in particular polypropylene, with at least one punching device (36) which at least partially separates the respective container product (12) from the frame waste (14), the punching device (36) being moveable by means of a drive that can be driven by a drive unit along a punching axis (44) from an initial position into a punching position and vice versa, **characterised in that** the drive is a ball screw which, by means of a damping system (72), prevents overloading of the ball screw (46) during the punching process, and that the damping system (72) has at least one energy store that decouples the punching device (36) from the ball screw (46).

2. The separating device according to Claim 1, **characterised in that** the drive unit is in the form of an electric motor (48).

3. The separating device according to Claim 1 or 2, **characterised in that** the respective energy store is in the form of a compression spring (74).

4. The separating device according to any of Claims 1 to 3, **characterised in that** the energy store of the damping system (72) extends between a stop plate (76) which is connected to the ball roller spindle (50) of the ball screw (46), and a guide plate (80) with the punching device (36).

5. The separating device according to Claim 4, **characterised in that** the stop plate (76) in a raised position of the punching device (36) strikes a stop (90) of the guide plate (80), and that the guide plate (80) is guided along at least one guide column (94).

6. The separating device according to any of Claims 1 to 5, **characterised in that** in order to adjust the punching plane of the punching device (36) an adjustment means (60) is used which has an adjustment plate (62) which can be vertically adjusted by means of at least one adjustable column (58).

7. The separating device according to Claim 6, **characterised in that** the respective guide column (94) of the guide plate (80) extends through the adjustment plate (62) and is at least partially fixed on it, and that the respective adjustable column (58) is farther away from the punching axis (44) than the respective guide column (94).

8. The separating device according to Claim 6 or 7, **characterised in that** the punching device (36) is at least partially encompassed by a hold-down device (100) which can be raised and lowered by means of at least one working cylinder (102) which is respectively connected to the adjustment plate (62).

9. The separating device according to Claim 8, **characterised in that** the hold-down device (100) presses the frame assemblage (10) with the container products (12) for a punching process against a die (24) which has recesses for at least partially accommodating the container products (12).

10. The separating device according to any of Claims 6 to 9, **characterised in that** in the adjustment plate (62) there is an ejector means (104) which ejects any container products (12) of the assemblage (10) remaining in the punching device (36).

## Revendications

1. Dispositif de séparation pour séparer des produits (12) individuels formant récipients d'une liaison (14) formant cadre, qui est en une matière plastique, notamment en polypropylène, comprenant au moins un dispositif (36) de découpage, qui sépare au moins en partie le produit (12) respectif formant récipient d'une chute (14) de cadre, le dispositif (36) de découpage étant mis en mouvement au moyen d'un actionnement pouvant être entraîné par un groupe d'entraînement le long d'un axe (44) de découpage, en passant d'une position de départ à une position de découpage et inversement, **caractérisé en ce que** l'actionnement est une vis à billes, **en ce qu'**au moyen d'un système (72) d'amortissement une surcharge de la vis (46) à billes lors de l'opération de découpage est empêchée et **en ce que** le système (72) d'amortissement comporte au moins un accumulateur d'énergie, qui découple le dispositif (36) de découpage de la vis (46) à billes.

2. Dispositif de séparation suivant la revendication 1, **caractérisé en ce que** le groupe d'entraînement est constitué sous la forme d'un moteur (48) électrique.

3. Dispositif de séparation suivant la revendication 1 ou 2, **caractérisé en ce que** l'accumulateur d'énergie respectif est constitué sous la forme d'un ressort (74) de compression.

4. Dispositif de séparation suivant l'une des revendications 1 à 3, **caractérisé en ce que** l'accumulateur d'énergie du système (72) d'amortissement s'étend entre un plateau (76) de butée, qui est relié à la broche (50) filetée à billes de la vis (46) à billes, et un plateau (80) de guidage ayant le dispositif (36) de découpage.

5. Dispositif de séparation suivant la revendication 4, **caractérisé en ce que** le plateau (76) de butée bute, en une position soulevée du dispositif (36) de découpage, sur une butée (90) du plateau (80) de guidage et **en ce que** le plateau (80) de guidage est guidé le long d'au moins une colonne (94) de guidage.

6. Dispositif de séparation suivant l'une des revendications 1 à 5, **caractérisé en ce que**, pour le réglage du plan de découpage du dispositif (36) de découpage, on se sert d'un dispositif (60) de réglage, qui comporte une plaque (62) de réglage, laquelle peut être réglée en hauteur à l'aide d'au moins une colonne (58) de réglage.

7. Dispositif de séparation suivant la revendication 6, **caractérisé en ce que** la colonne (94) respective de guidage du plateau (80) de guidage traverse la plaque (62) de réglage et y est fixée au moins en partie et **en ce que** la colonne (58) respective de réglage est plus éloignée de l'axe (44) de découpage que la colonne (94) respective de guidage.

8. Dispositif de séparation suivant la revendication 6 ou 7, **caractérisé en ce que** le dispositif (36) de découpage est entouré au moins en partie d'un dispositif (100) de serre flanc, qui peut être soulevé et abaissé au moyen d'au moins un vérin (102) de travail, lequel est relié respectivement à la plaque (62) de réglage.

9. Dispositif de séparation suivant la revendication 8, **caractérisé en ce que** le dispositif (100) de serre flanc repousse la liaison (10) formant cadre avec les produits (12) formant récipients pour une opération de découpage sur une matrice (24), qui a des évidements pour loger au moins en partie les produits (12) formant récipients.

10. Dispositif de séparation suivant l'une des revendications 6 à 9, **caractérisé en ce que** dans la plaque (62) de réglage est disposé un dispositif (104) d'éjection, qui éjecte des produits (12) formant récipients de la liaison (10) restés éventuellement dans le dispositif (36) de découpage.
